# EUROPEAN PATENT SPECIFICATION

(11) **EP 1 850 531 B1**
(45) Date of publication and mention of the grant of the patent: **12.06.2013**
(21) Application number: 06290679.7
(22) Date of filing: 26.04.2006
(51) Int. Cl.: H04W 76/02, H04W 92/02, H04W 76/04

(54) **Method and architecture for interworking of standardised networks**
Verfahren und Architektur für die Zusammenarbeit von standardisierten Netzen
Méthode et architecture pour interfonctionnement des réseaux standardisés

(43) Date of publication of application: 31.10.2007
(73) Proprietor: Alcatel Lucent, 75007 Paris (FR)
(72) Inventor: Fiat, Lionel, 92380 Garches (FR)
(74) Representative: Wetzel, Emmanuelle

(56) References cited:
- US-A1- 2006 018 280
- SALKINTZIS A K: "INTERWORKING TECHNIQUES AND ARCHITECTURES FOR WLAN/3G INTEGRATION TOWARD 4G MOBILE DATA NETWORKS" IEEE WIRELESS COMMUNICATIONS, IEEE SERVICE CENTER, PISCATAWAY, NJ, US, vol. 11, no. 3, June 2004 (2004-06), pages 50-61, XP001217417 ISSN: 1536-1284
- NGUYEN-VUONG Q-T ET AL: "An Architecture for UMTS-WIMAX Interworking" PERVASIVE COMPUTING AND COMMUNICATIONS WORKSHOPS, 2006. PERCOM WORKSHOPS 2006. FOURTH ANNUAL IEEE INTERNATIONAL CONFERENCE ON PISA, ITALY 13-17 MARCH 2006, PISCATAWAY, NJ, USA,IEEE, 7 April 2006 (2006-04-07), pages 1-5, XP002395788 ISBN: 0-7695-2520-2

## Description

### Background of the invention

The present invention relates to a method for performing interworking of a standardised wireless communication network, particularly but not limited to a WiMAX network, and a standardised cellular network, particularly but not limited to a 3GPP or 3GPP2 core network.

The present invention also relates to a network element for use in interworking of a standardised wireless communication network and a standardised cellular network, such as a WiMAX network and a 3GPP/3GPP2 core networld, respectively.

Furthermore, the present invention relates to a communication system comprising a standardised wireless communication network including at least one base station for connecting of at least one user equipment and a standardised cellular network operatively connected for interworking with said standardised wireless communication network, as well as to a computer program product for use in an interworking communication system of the above-mentioned type.

Interworking of different types of standardised networks, i.e. standardised wireless communication networks and a standardised cellular networks, such as Wireless Microwave Access (WiMAX) networks and 3^{rd} Generation Partnership (3GPP) networks, respectively, is an important issue in communication technology.

Document ETSI TS 123 234 V6.7.0 (2005-12): "Universal Mobile Telecommunications System (UMTS); 3GPP System to Wireless Local Area Network (WLAN) Interworking; System Description (3GPP TS 23.234 version 6.7.0 Release 6)" discloses a standardised approach to interworking of 3GPP and WLAN networks. It has been proposed to reuse the above-mentioned interworking approach with respect to 3GPP-WiMAX interworking. However, such an approach suffers from important drawbacks:

Reusing the above-mentioned 3GPP WLAN interworking solution would mean using Virtual Private Network (VPN)-like tunnels from a (mobile) user equipment (UE) to a Packet Data Gateway (PDG) of the 3GPP network, which is not well suited for a WiMAX context, as said VPN-like tunnels are based on Internet Key Exchange version 2 (IKEv2) and Internet Protocol Security (IPSec) implementations: IKEv2 performs cyclic keep alive which will forbid a WiMAX terminal to enter in an idle mode, thus requiring additional signalling over the radio link in conjunction with excess terminal power consumption. IPSec, on the other hand, is unuseful, because WiMAX already offers a secured end-to-end solution, so that additional IPsec encryptation/integrity over WiMAX will only produce overhead communication on the WiMAX radio link. Additionally, unuseful IPSec requires additional CPU performance in both the terminal and the network, thus leading to increased cost expenditure.

A method for performing interworking of a standardised wireless communication network and a standardised cellular network are known from Salkintzis A K, "Interworking Techniques and Architectures for WLAN/3G Integration Toward 4G Mobile Data Networks", IEEE Wireless Communications, IEEE Service Center, Piscataway, NJ, US, vol. 11, no. 3, June 2004 (2004-06), pages 50-61, XP001217417 ISSN: 1536-1284. This article discloses methods and systems for WLAN/3G inter-working, wherein AAA (Authentication, Authorization, Accounting) signalling as defined within the 3GPP standard is used to signal a W-APN (WLAN Access Point Name; corresponding to a PDG - Packet Data Gateway or TTG - Tunnel Termination Gateway for connecting a user equipment or terminal). The article teaches an approach to inter-working of standardised wireless and cellular networks which is based on standards established by the cellular network (AAA traffic), thus neglecting native wireless technology, which results in limited interworking versatility. Further, the article discloses routing enforcement with "MS-Transparent Tunnelling" mechanism, wherein normal IP routing in contrast to tunnelling is performed within the standardised wireless network.

### Object of the Invention

It is the object of the present invention to provide a method and communication system architecture which enable efficient interworking of standardised networks while reducing power consumption, overhead and double encryption network communication and corresponding system requirements.

### Summary of the Invention

According to a first aspect of the present invention, the object is achieved by providing a method for performing interworking of a standardised wireless communication network and a standardised cellular network, comprising the steps of:
- using a marked service flow over a radio link in the standardised wireless communication network as being dedicated to be sent over the standardised cellular network, wherein using said marked service flow is performed by including signalling information for use in the standardised cellular network into a service flow management signalling of the standardised wireless communication network;
- transporting said marked service flow in a service flow tunnel in the standardised wireless communication network;
- mapping said service flow tunnel to an inter-network tunnel from an element of said standardised wireless communication network to an element of said standardised cellular network.

According to a second aspect of the present invention, the object is also achieved a providing a network element for use in interworking of a standardised wireless communication network and a standardised cellular network, comprising means for receiving service flows from the standardised wireless communication network, for detecting a marked service flow being dedicated to be sent over the standardised cellular network among the received service flows, the service flow being marked over a radio link of the standardised wireless communication network by including signalling information for use in the standardised cellular network into a service flow management signalling of the standardised wireless communication network, and for mapping a tunnel of said marked service flow to an inter-network tunnel to an element of the standardised cellular network.

In accordance with a third aspect of the present invention, the object is achieved by providing a communication system of the above-mentioned type, further comprising:
- a first network element according to the second aspect of the present invention in said standardised wireless communication network; and
- a second network element in said standardised cellular network, comprising means for establishing at least one inter-network tunnel with said element of the standardised wireless communication network for mapping a service flow of the standardised wireless communication network marked as dedicated to be sent over the standardised cellular network.

In accordance with a fourth aspect of the present invention, the object is further achieved by providing a Computer program product for use in an interworking communication system including a standardised wireless communication network and a standardised cellular network, said computer program product comprising program code sequences operable to:
- mark a service flow over a radio link of the standardised wireless communication network by including signalling information for use in the standardised cellular network into a service flow management signalling of the standardised wireless communication network;
- use said marked service flow as being dedicated to be sent over the standardised cellular network;
- transport said marked service flow in a service flow tunnel in the standardised wireless communication network;
- map said service flow tunnel to an inter-network tunnel from an element of said standardised wireless communication network to an element of said standardised cellular network,
when executed on elements of said communication system.

Thus, in accordance with a general idea underlying the present invention, efficient interworking of different standardised networks, e.g. 3GPP-WiMAX interworking, is achieved by mapping dedicated tunnels from the standardised wireless communication network to the standardised cellular network. For instance, service flows can be relayed over IEEE 802.16 WiMAX radio links to a 3GPP core network. In this context, the present invention makes use of the fact that two service flows are completely distinguishable between an end terminal/user equipment and an associated base station or access point for each terminal flow, i. e. data/service flow from a given user equipment.

For the above example, IEEE service flows correspond to tunnels over a WiMAX radio link. The inventive idea therefore consists in mapping the 3GPP tunnel concept (Packet Data Protocol (PDP) concept) directly in correspondence with the above-described IEEE service flow concept and to tunnel said service flows through the WiMAX network to the 3GPP core network.

An embodiment of the method in accordance with the present invention consists in using IEEE 802.16e Global Service Class names for this purpose. Thus, the Global Service Class name associated with a given service flow would contain specific 3GPP PDP attributes, such as Access Point Name (APN) and/or Network Service Access Point Identifier (NSAPI).

In another embodiment of the method in accordance with the present invention, the step of mapping the marked service flow is performed using an RFC 2868 tunnelling protocol. The tunnelling according to RFC 2868 is described in Network Working Group publication "Radius Attributes for Tunnel Protocol Support", http:\\www.ietf.org\rfc\rfc2868.txt. Using this approach, each service flow of the standardised wireless communication network is mapped to a separate tunnel between said element of the standardised wireless communication network and said element of the standardised cellular network.

In yet another embodiment of the method in accordance with the present invention, a plurality of dedicated service flows are mapped by extended Mobile IP (MIP) tunnelling.

In a further embodiment of the communication system in accordance with the present invention said first and second network elements are embedded in a single network entity. This way, service flow tunnelling may be achieved internally within said network entity, thus considerably facilitating interworking communication. In connection with the use of a Home Agent additional implementations based on extended Mobile IP and/or micro-mobility concepts can also be employed.

When using a Home Agent, as known from Mobile IP routing, the network element in the standardised cellular network may include a routing functionality of a home network of a mobile user equipment. In this way, an extended Mobile IP (MIP) solution can be employed, thus enabling to tunnel different service flows per user terminal over MIP.

Further advantages and characteristics of the present invention can be gathered from the following description of preferred embodiments given by way of example only with reference to the enclosed drawings. Features mentioned above as well as below can be used in accordance with the invention either individually or in conjunction. The embodiments mentioned are not to be understood as an exhaustive enumeration but rather as examples with regard to the underlying concept of the present invention.

### Drawings

Fig. 1 is a schematic block diagram of a first embodiment of a communication system in accordance with the present invention;
Fig. 2 is a schematic block diagram of a second embodiment of a communication system in accordance with the present invention; and
Fig. 3 is a schematic block diagram of a third embodiment of a communication system in accordance with the present invention; and

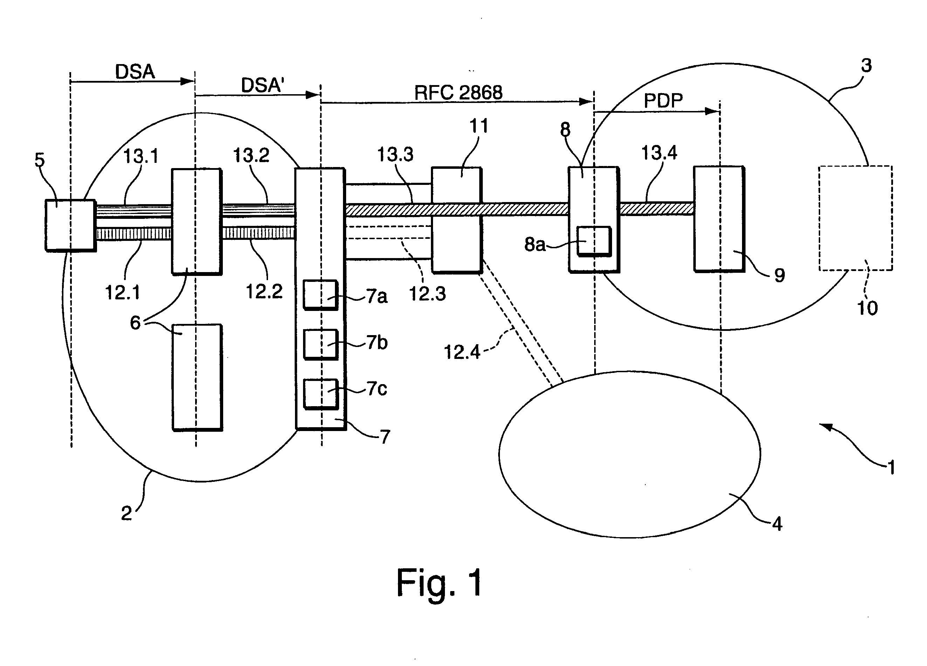

**Fig. 1** shows a schematic block diagram of an embodiment of a communication system 1 in accordance with the present invention. The communication system 1 generally comprises a standardised wireless communication network in the form of a WiMAX network 2 and a standardised cellular network in the form of a 3G core network 3, which are operatively connected for interworking. Additionally, in accordance with the embodiment shown the communication system 1 further comprises a further network in the form of an IP network/internet **4.**

In the WiMAX network section 2, the communication system 1 comprises at least one mobile terminal 5, also referred to as mobile station (MS) or user equipment (UE). Furthermore, the WiMAX network 2 comprises a number of base stations (BS) 6, also referred to as access points. The base stations 6 are connected with an Access Server Node Gateway (ASN-GW) 7, also referred to as Wimax Access Controler (WAC), which functions as a router for transmissions from a number of base stations 6, as shown. According to the embodiment of Fig. 1, the WAC 7 comprises means 7a for receiving service flows from the WiMAX network 2, means 7b for detecting a marked service flow being dedicated to be sent over the 3G core network 3 among the received service flows, and means **7c** for mapping a tunnel of said marked service flow to an inter-network tunnel to an element of the 3G core network 3. At least some or all of said means 7a-c can be devised in software form. The functioning of said means 7a-c will become apparent later. However, it should already be noted here that according to the present invention means 7a-c may also be (alternatively) embedded in one of base stations 6.

In the 3G network section, also referred to as 3^{rd} Generation Partnership Project (3GPP) network, the communication system 1 comprises at least a first network element **8,** in the following referred to as Tunnel Termination Gateway (TTG), a second network element **9,** in the following referred to as Gateway GPRS Support Node (GGSN). Second network element 9 is operatively connected with a Packet Data Network (PDN) **10 ,** i.e., an IP network.
Furthermore, the communication system 1 of Fig. 1 comprises another element **11** referred to as Home Agent (HA). As further indicated in Fig. 1, TTG 8 comprises means **8a** for establishing at least one inter-network tunnel of the WiMAX network 2 for mapping a WiMAX service flow marked as dedicated to be sent over the 3G core network 3, the functioning of which will become apparent later. Said means 8a are preferably devised in software form.

The functioning of the above-mentioned elements of communication system 1 will now be explained to some extent in connection with an operation of the shown embodiment of the communication system 1 in accordance with the present invention:

In the interworking scenario considered here, user equipment 5 first sends a Dynamic Service Addition (DSA) request for service flow addition to base station 6, as indicated by means of horizontal arrow marked **DSA** in Fig. 1.

As further indicated in Fig. 1, said DSA request may be for addition of non-3GPP service flow **12.1** and/or for addition of 3GPP service flow **13.1** (cf. below). Upon reception of DSA request from user equipment 5, base station 6 sends out a further DSA request for service flow addition to WAC 7, as indicated by means of horizontal arrow **DSA'** in Fig. 1. WAC 7 then issues a Tunnel Initiation Request, preferably but not limited to a RFC 2868 Tunnel Initiation Request, to TTG 8 situated in the 3GPP network 3. In Fig. 1, said Tunnel Initiation Request is indicated by means of horizontal arrow **RFC 2868.** TTG 8 then sends a Packet Data Protocol (PDP) context activation message to GGSN 9, as indicated by means of horizontal arrow **PDP** in Fig. 1.

As a consequence of the above-described transmission of requests DSA, DSA', RFC 2868, PDP a number of service flow tunnels are established respectively within and between WiMAX network 2 and 3GPP network 3. As already stated above, service flow tunnels 12.1, 13.1 for non-3GPP service flow and 3GPP service flow, respectively, are established over a radio link between user equipment 5 and base station 6. Base station 6 then relays said service flows to WAC 7 via service flow tunnel **12.2** for non-3GPP service flow and service flow tunnel **13.2** dedicated for the 3GPP service flow and marked accordingly. In WAC 7, said marked service flow 13.2 is received and detected among a totality of received service flows 12.2, 13.2 by receiving means 7a and detecting means 7b, respectively.

In accordance with the present invention, said marking of a service flow over the radio link as "3GPP service flow" intended for mapping to the 3GPP network 3 can be achieved in a variety of ways: Preferably, Global Service Class names as described in specification IEEE 802.16e may be used.

Such an approach has been described in European Patent Application 05292696.1 ("Method for 3GPP-WiMAX interworking") filed 13 December 2005 in the name of the present applicant.

Accordingly, a Global Service Class name associated with a given service flow will comprise certain 3GPP PDP attributes, e. g., an Access Point Name (APN) and/or Network Service Access Point Identifier (NSAPI) are added to the Global Service Class name in order to signal in the WiMAX network 2 a terminal service flow which has to be mapped with the 3GPP core network 3. Alternatively, other approaches may be used to exchange 3GPP PDP signalling between the WiMAX user equipment 5 and the WiMAX network 2: For instance, a specific service flow may be used together with 3GPP GPRS session management (SM), like Protocol over IP.

In a subsequent step, the WiMAX network 2 relays received and detected service flow tunnel 13.2 together with the above-mentioned 3GPP PDP attributes to said first network element 8 (TTG) of 3GPP core network 3 using mapping means 7c. In this context, service flow tunnel 13.2 to be mapped can also be referred to as "per service flow" tunnel, since every service flow is being tunnelled individually from the user equipment 5 to TTG 8.

A standard configuration and functioning of TTG 8 is described in 3GPP TS 23.234 Release 6 (cf. above) and is assumed to be known to a person skilled in the art. In the context of the shown embodiment, in accordance with the present invention TTG functionality is extended to enable additional tunnel signalling and data tunnelling with respect to standard TTG functionality. In the shown embodiments, this can be achieved by suitably devising said means 8a for establishing an inter-network tunnel with WAC 7 comprised in TTG 8, preferably by providing corresponding program code sequences thereto.

In an alternative to the embodiment shown in Fig. 1, the functionality of receiving service flows, detecting a marked service flow among the received service flows and of mapping a tunnel of said marked service flow performed respectively by means 7a-c comprised in WAC 7, said functionality can be performed by corresponding means (not shown) included in base station 6, as will be appreciated by a person skilled in the art.

In Fig. 1, service flow tunnel **13.3** established for mapping/relaying of service flow tunnel 13.2 to TTG 8 corresponds to said inter-network tunnel established between an element (WAC 7) of WiMAX network 2 and an element (TTG 8) of 3GPP core network 3. Preferably, service flow tunnel 13.3 is devised as an RFC 2868 tunnel. TTG 8 then relays the service flow on 3GPP PDP tunnel 13.4 to GGSN 9 and eventually to other elements within 3GPP core network 3.

As will be appreciated by a person skilled in the art, the non-3GPP service flow initiated on service flow tunnel 12.1 and further relayed to WAC 7 via service flow tunnel 12.2 is managed normally according to WiMAX fashion by further relaying to the IP network/internet 4 on MS Mobile IP (MIP) tunnel **12.3** and IP flow tunnel **12.4** via Home Agent (HA) 11, as known to a person skilled in the art.

In this way, a communication system 1 in accordance with the present invention by means of network element WAC 7 / base station 6 and network element TTG 8 achieves relaying service flows over IEEE 802.16/WiMAX radio links from WiMAX network 2 to 3GPP core network 3, wherein two service flows 12.1, 13.1, i. e. non-3GPP service flows and 3GPP service flows, respectively, are completely distinguishable between a mobile terminal 5 and an associated base station 6 for every terminal flow. In this context, IEEE service flows correspond to tunnels over the WiMAX radio link. As described in detail above, the basic idea in accordance with the present invention consists in mapping the 3GPP tunnelling concept, i. e. PDP concept, in correspondence with said WiMAX service flow concept and to tunnel said WiMAX service flows through the WiMAX network to the 3GPP core network.

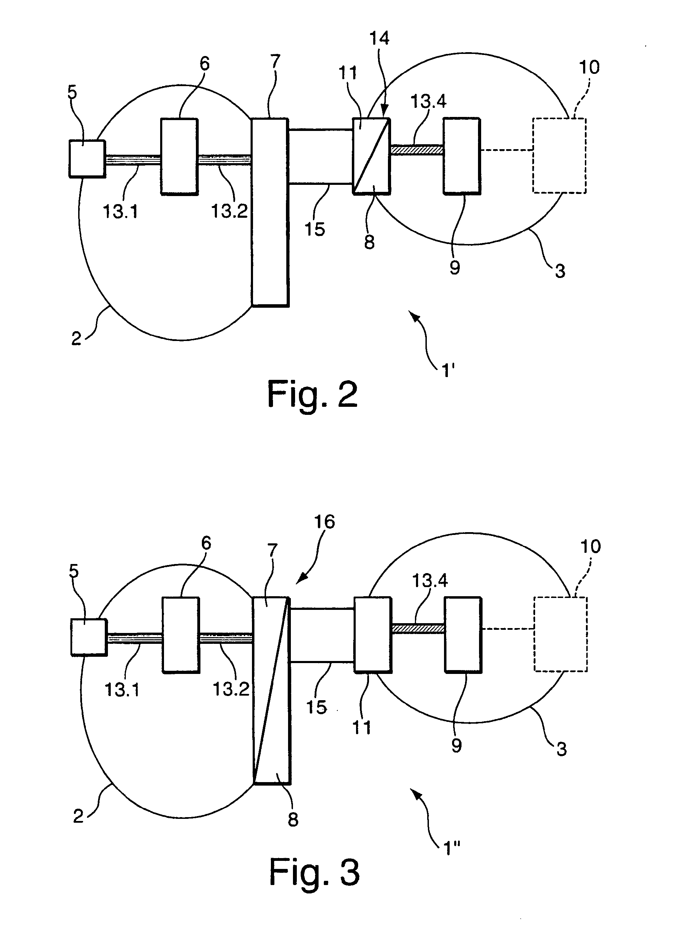

**Fig. 2** is a schematic block diagram of a second embodiment of a communication system **1'** in accordance with the present invention. Elements of the communication system 1' corresponding or similar in configuration and/or function to elements of the communication system 1 of Fig. 1 have been assigned the same reference numerals. For reasons of simplicity, non-3GPP service flows have not been included in Fig. 2.

The communication system 1' of Fig. 2 comprises a user equipment 5 operatively connected with WAC 7 via base station 6. Base station 6 and WAC 7 constitute WiMAX network 2. 3GPP core network 3 of Fig. 2 comprises at least GGSN 9 and a further element **14** including merged Home Agent (HA) 11 and tunnel termination gateway (TTG) 8 (cf. Fig. 1). In this case, as shown in Fig. 2, an extended Mobile IP (MIP) solution may be employed: The "per service flow" tunnel for 3GPP service flows interconnecting different standardised networks 2, 3 is devised in the form of an extended MIP tunnel 15 enabling to tunnel different flows (e.g., 3GPP service flows and non-3GPP service flows) per mobile terminal/user equipment 5 over MIP to the 3GPP network 3.

**Fig. 3** shows a schematic block diagram of a third embodiment of a communication system 1" in accordance with the present invention. Again, in Fig. 3 the same reference numerals have been used to designate elements of similar configuration and/or functionality with respect to the description of figs. 1 and 2.

The communication system 1" of Fig. 3 comprises a user equipment 5 operatively connected with a base station 6 of WiMAX network 2. 3GPP core network 3 comprises at least GGSN 9. Interworking of WiMAX network 2 and 3GPP core network 3 is achieved by means of a further element **16** functioning as an interface between WiMAX network 2 and 3GPP core network 3, wherein said element 16 effectively includes functionality of both WAC 7 and TTG 8, as indicated in Fig. 3. In other words, according to the embodiment of Fig. 3, the TTG 8 has been embedded in the WAC 7, so that a "per service flow" tunnel interconnecting different standardised networks 2, 3 may be devised internally within said element 16 by any suitable means. Furthermore, in the embodiment of Fig. 3, there is a Home Agent (HA) 11 in operative connection with the combined WAC 7 / TTG 8 (cf. figs. 1, 2).

In this case a GPRS Tunnelling Protocol (GTP) tunnelling used between WAC-TTG 16 and GGSN 9 preferably is an extended GTP tunnelling, which as such does not form part of the present invention.

Alternatively (case not shown in Figs 1 through 3), TTG 8 and GGSN 9 could be embedded in one common network entity, thus constituting Packet Data Gateway (PDG) of the 3GPP network. This is equivalent to saying that the protocols used at interfaces to the WiMAX network are standard IKEv2 and IPSec. In this particular case, entity 7 (WAC) functions as an IKEv2 /IPSec client and performs mapping with said marked service flows over a radio link in the standardised wireless communication network, i.e. the WiMAX network.

This way, a method and architecture for interworking of different standardised networks, in particular 3G-WiMAX interworking, is achieved which does not rely on reusing Release 6 3GPP-WLAN interworking solutions, which would mean employing VPN-like tunnels from a user equipment to the PDG, i. e. the TTG, which are not particularly well matched with the WiMAX context.

## Claims

1. A method for performing interworking of a standardised wireless communication network (2) and a standardised cellular network (3), **characterised by** the steps of:
- using a marked service flow over a radio link in the standardised wireless communication network (2) as being dedicated to be sent over the standardised cellular network (3), wherein using said marked service flow is performed by including signalling information for use in the standardised cellular network (3) into a service flow management signalling of the standardised wireless communication network (2);
- transporting said marked service flow in a service flow tunnel (13.2) in the standardised wireless communication network (2);
- mapping said service flow tunnel (13.2) to an inter-network tunnel (13.3, 15) from an element (7) of said standardised wireless communication network (2) to an element (8) of said standardised cellular network (3).

2. The method of claim 1, **characterised in that** the standardised wireless communication network (2) is a WiMAX network.

3. The method of claim 1, **characterised in that** the standardised cellular network (3) is a 3GPP core network or a 3GPP2 core network.

4. The method of claim 1, **characterised in that** said step of mapping the marked service flow (13.2) is performed using an RFC 2868 tunnelling protocol.

5. The method of claim 1, **characterised in that** a plurality of service flows comprising said marked service flow (13.2) are mapped by extended Mobile IP, MIP, tunnelling for enabling to tunnel different flows from a user equipment (5) over MIP to the standardised cellular network (3).

6. A network element (6, 7) for use in interworking of a standardised wireless communication network (2) and a standardised cellular network (3), **characterised by** means (7a-c) for receiving service flows (12.1, 12.2; 13.1, 13.2) from the standardised wireless communication network (2), for detecting a marked service flow (13.1, 13.2) being dedicated to be sent over the standardised cellular network (3) among the received service flows (12.1, 12.2; 13.1, 13.2), the service flow being marked over a radio link of the standardised wireless communication network (2) by including signalling information for use in the standardised cellular network (3) into a service flow management signalling of the standardised wireless communication network (2), and for mapping a tunnel of said marked service flow to an inter-network tunnel (13.3, 15) to an element (8) of the standardised cellular network.

7. A communication system (1, 1', 1") comprising:
- a standardised wireless communication network (2) including at least one base station (6) for connecting of at least one user equipment (5);
- a standardised cellular network (3) operatively connected for interworking with said standardised wireless communication network (2);
**characterised by**
- a first network element (6, 7) according to claim 6 in said standardised wireless communication network (2); and
- a second network element (8) in said standardised cellular network (3), comprising means (8a) for establishing said inter-network tunnel (13.3, 15) with said element (6, 7) of the standardised wireless communication network (2) for mapping a service flow of the standardised wireless communication network (2) marked as dedicated to be sent over the standardised cellular network (3).

8. Computer program product for use in an interworking communication system (1, 1', 1") including a standardised wireless communication network (2) and a standardised cellular network (3), said computer program product being **characterised by** comprising program code sequences operable to:
- mark a service flow (13.2) over a radio link of the standardised wireless communication network (2) by including signalling information for use in the standardised cellular network (3) into a service flow management signalling of the standardised wireless communication network (2):
- use said marked service flow (13.2) as being dedicated to be sent over the standardised cellular network (3);
- transport said marked service flow (13.2) in a service flow tunnel in the standardised wireless communication network (2);
- map said service flow tunnel to an inter-network tunnel (13.3, 15) from an element (7) of said standardised wireless communication network (2) to an element (8) of said standardised cellular network (3),
when executed on elements (6, 7, 8, 11, 14, 16) of said communication system (1, 1', 1").

## Patentansprüche

1. Verfahren für die Zusammenarbeiten eines standardisierten drahtlosen Kommunikationsnetzwerks (2) und eines standardisierten zellularen Netzwerks (3), durch die folgenden Schritte gekennzeichnet:
- Verwenden eines markierten Dienstflusses über eine Funkverbindung in dem standardisierten drahtlosen Kommunikationsnetzwerk (2) als für die Übertragung über das standardisierte zellulare Netzwerk (3) bestimmt, wobei das Verwenden des besagten markierten Dienstflusses durch Einfügen von Signalisierungsinformationen zur Verwendung in dem standardisierten zellularen Netzwerk (3) in eine Dienstflussverwaltungssignalisierung des standardisierten drahtlosen Kommunikationsnetzwerks (2) erfolgt;
- Transportieren des besagten markierten Dienstflusses in einem Dienstflusstunnel (13.2) in dem standardisierten drahtlosen Kommunikationsnetzwerk (2);
- Abbilden des besagten Dienstflusstunnels (13.2) zu einem Tunnel zwischen den Netzwerken (13.3, 15) von einem Element (7) des besagten standardisierten drahtlosen Kommunikationsnetzwerks (2) auf ein Element (8) des besagten standardisierten zellularen Netzwerks (3).

2. Verfahren nach Anspruch 1, **dadurch gekennzeichnet, dass** das standardisierte drahtlose Kommunikationsnetzwerk (2) ein WiMAX-Netzwerk ist.

3. Verfahren nach Anspruch 1, **dadurch gekennzeichnet, dass** das standardisierte zellulare Netzwerk (3) ein 3GPP-Kernnetzwerk oder ein 3GPP2-Kernnetzwerk ist.

4. Verfahren nach Anspruch 1, **dadurch gekennzeichnet, dass** der besagte Schritt des Abbildens des markierten Dienstflusses (13.2) unter Verwendung eines RFC 2868-Tunneling-Protokolls durchgeführt wird.

5. Verfahren nach Anspruch 1, **dadurch gekennzeichnet, dass** eine Vielzahl von Dienstflüssen, welche den besagten markierten Dienstfluss (13.2) einschließen, durch erweitertes Mobil-IP bzw. MIP-Tunneling abgebildet werden, um das Tunneln verschiedener Flüsse von einem Benutzergerät (5) über MIP an das standardisierte zellulare Netzwerk (3) zu ermöglichen.

6. Netzwerkelement (6, 7) zur Verwendung für die Zusammenarbeit eines standardisierten drahtlosen Kommunikationsnetzwerks (2) und eines standardisierten zellularen Netzwerks (3), **gekennzeichnet durch** Mittel (7a-c) für den Empfang von Dienstflüssen (12.1, 12.2; 13.1, 13.2) von dem standardisierten drahtlosen Kommunikationsnetzwerks (2), für das Erkennen eines markierten Dienstflusses (13.1, 13.2), welcher für die Übertragung über das standardisierte zellulare Netzwerks (3) bestimmt Ist, unter den empfangenen Dienstflüssen (12,1, 12.2; 13.1, 13.2), wobei der Dienstfluss über eine Funkverbindung des standardisierten drahtlosen Kommunikationsnetzwerks (2) **durch** Einfügen von Signalisierungsinformationen zur Verwendung in dem standardisierten zellularen Netzwerk (3) In eine Dienstflussverwaltungssignalisierung des standardisierten drahtlosen Kommunikationsnetzwerks (2) markiert wird, und für das Abbilden eines Tunnels des besagten markierten Dienstflusses zu einem Tunnel (13.3, 15) zwischen den Netzwerken auf ein Element (8) des standardisierten zellularen Netzwerks.

7. Kommunikationssystem (1, 1', 1"), umfassend:
- Ein standardisiertes drahtloses Kommunikationsnetzwerk (2) mit mindestens einer Basisstation (6) für den Anschluss mindestens eines Benutzergeräts (5);
- ein standardisiertes zellulares Netzwerk (3), welches operativ für die Zusammenarbeit mit dem besagten standardisierten drahtlosen Kommunikationsnetzwerk (2) angeschlossen ist;
**gekennzeichnet durch**
- ein erstes Netzwerkelement (6, 7) gemäß Anspruch 6 in dem besagten standardisierten drahtlosen Kommunikationsnetzwerk (2); und
- ein zweites Netzwerkelement (8) in dem besagten standardisierten zellularen Netzwerk (3), mit Mitteln (8a) zum Aufbauen des besagten Tunnels (13.3, 15) zwischen den Netzwerken mit dem besagten Element (6, 7) des standardisierten drahtlosen Kommunikationsnetzwerks (2) zum Abbilden eines Dienstflusses des standardisierten drahtlosen Kommunikationsnetzwerks (2), welcher als für die Übertragung über das standardisierte zellulare Netzwerk (3) bestimmt markiert ist.

8. Computerprogramm-Produkt zur Verwendung in einem zusammenarbeitenden Kommunikationssystem (1, 1', 1"), welches ein standardisiertes drahtloses Kommunikationsnetzwerk (2) und ein standardisiertes zellulares Netzwerk (3) umfasst, wobei das besagte Computerprogramm-Produkt **dadurch gekennzeichnet ist, dass** es Programmcodesequenzen enthält, welche für das Durchführen der folgenden Schritte betrieben werden können:
- Markieren eines Dienstflusses (13.2) über eine Funkverbindung des standardisierten drahtlosen Kommunikationsnetzwerks (2) durch Einfügen von Signalisierungeinformationen zur Verwendung in dem standardisierten zellularen Netzwerk (3) in eine Dienstflussverwaltungssignalisierung des standardisierten drahtlosen Kommunikationsnetzwerks (2);
- Verwenden des besagten markierten Dienstflusses (13.2) als für die Übertragung über das standardisierte zellulare Netzwerk (3) bestimmt;
- Transportieren des besagten markierten Dienstflusses (13.2) in einem Dienstflusstunnel In dem standardisierten drahtlosen Kommunikationsnetzwerk (2);
- Abbilden des besagten Dienstflusstunnels zu einem Tunnel (13.3, 15) zwischen den Netzwerken von einem Element (7) des besagten standardisierten drahtlosen Kommunikationsnetzwerks (2) auf ein Element (8) des besagten standardisierten zellularen Netzwerks (3),
wenn es auf Elementen (6, 7, 8, 11, 14, 16) des besagten Kommunikationssystems (1, 1', 1") ausgeführt wird.

## Revendications

1. Procédé destiné à réaliser un interfonctionnement entre un réseau de communication sans fil normalisé (2) et un réseau cellulaire normalisé (3), **caractérisé par** les étapes suivantes
- utitiser un flux de service marqué sur une liaison radio dans le réseau de communication sans fil normalisé (2) comme dédié pour être envoyé sur le réseau cellulaire normalisé (3), dans lequel l'utilisation dudit flux de service marqué est réalisée en incluant des informations de signalisation à utiliser dans le réseau cellulaire normalisé (3) dans une signalisation de gestion de flux de service du réseau de communication sans fil normalisé (2) ;
- transporter ledit flux de service marqué dans un tunnel de flux de service (13,2) dans le réseau de communication sans fil normalisé (2) ;
- mettre en correspondance ledit tunnel de flux de service (13.2) avec un tunnel inter-réseau (13.3, 15) à partir d'un élément (7) dudit réseau de communication sans fil normalisé (2) vers un élément (8) dudit réseau cellulaire normalisé (3).

2. Procédé selon la revendication 1, **caractérisé en ce que** le réseau de communication sans fil normalisé (2) est un réseau WiMAX.

3. Procédé selon la revendication 1, **caractérisé en ce que** le réseau cellulaire normalisé (3) est un coeur de réseau 3GPP ou un coeur de réseau 3GPP2.

4. Procédé selon la revendication 1, **caractérisé en ce que** ladite étape de mise en correspondance du flux de service marqué (13.2) est réalisée en utilisant un protocole de tunnelisation RFC 2868.

5. Procédé selon la revendication 1, **caractérisé en ce qu'**une pluralité de flux de service comprenant ledit flux de service marqué (13.2) est mise en correspondance par tunnelisation IP Mobile, MIP, étendue pour permettre la tunnelisation de différents flux à partir d'un équipement utilisateur (5) sur MIP vers le réseau cellulaire normalisé (3).

6. Élément de réseau (6, 7) à utiliser dans un interfonctionnement entre un réseau de communication sans fil normalisé (2) et un réseau cellulaire normalisé (3), **caractérisé par** des moyens (7a à c) pour recevoir des flux de service (12,1, 12.2 ; 13.1, 13.2) à partir du réseau de communication sans fil normalisé (2), pour détecter un flux de service marqué (13.1, 13,2) dédié pour être envoyé sur le réseau cellulaire normalisé (3) parmi les flux de service reçus (12.1, 12.2 ; 13.1, 13.2), le flux de service étant marqué sur une liaison radio du réseau de communication sans fil normalisé (2) en incluant des informations de signalisation à utiliser dans le réseau cellulaire normalisé (3) dans une signalisation de gestion de flux de service du réseau de communication sans fil normalisé (2), et pour mettre en correspondance un tunnel dudit flux de service marqué avec un tunnel inter-réseau (13.3, 15) vers un élément (8) du réseau cellulaire normalisé.

7. Système de communication (1, 1', 1") comprenant :
- un réseau de communication sans fil normalisé (2) comprenant au moins une station de base (6) pour la connexion d'au moins un équipement utilisateur (5) ;
- un réseau cellulaire normalisé (3) connecté de manière opérationnelle pour un interfonctionnement avec ledit réseau de communication sans fil normalisé (2) ;
**caractérisé par**
- un premier élément de réseau (6, 7) selon la revendication 6 dans ledit réseau de communication sans fil normalisé (2) ; et
- un deuxième élément de réseau (8) dans ledit réseau cellulaire normalisé (3), comprenant des moyens (8a) pour établir ledit tunnel inter-réseau (13.3, 15) avec ledit élément (6, 7) du réseau de communication sans fil normalisé (2) pour mettre en correspondance un flux de service du réseau de communication sans fil normalisé (2) marqué comme dédié pour être envoyé sur le réseau cellulaire normalisé (3).

8. Produit de programme informatique à utiliser dans un système de communication à interfonctionnement (1, 1', 1") comprenant un réseau de communication sans fil normalisé (2) et un réseau cellulaire normalisé (3), ledit produit de programme informatique étant **caractérisé en ce qu'**il comprend des séquences de code de programme permettant :
- de marquer un flux de service (13.2) sur une liaison radio du réseau de communication sans fil normalisé (2) en incluant des informations de signalisation à utiliser dans le réseau cellulaire normalisé (3) dans une signalisation de gestion de flux de service du réseau de communication sans fil normalisé (2) :
- d'utiliser ledit flux de service marqué (13.2) comme dédié pour être envoyé sur le réseau cellulaire normalisé (3) ;
- de transporter ledit flux de service marqué (13.2) dans un tunnel de flux de service dans le réseau de communication sans fil normalisé (2) ;
- de mettre en correspondance ledit tunnel de flux de service avec un tunnel inter-réseau (13.3, 15) à partir d'un élément (7) dudit réseau de communication sans fil normalisé (2) vers un élément (8) dudit réseau cellulaire normalisé (3),
lorsqu'il est exécuté sur des éléments (6, 7, 8, 11, 14, 16) dudit système de communication (1, 1', 1").
